# EUROPEAN PATENT APPLICATION

(11) **EP 1 901 523 A2**
(43) Date of publication of application: **19.03.2008**
(21) Application number: 08000159.7
(22) Date of filing: 23.02.2005
(51) Int. Cl.: H04L 29/06

(54) **Display with a passive or actuated mode for wireless communication device**

(30) Priority: 18.03.2004 US 803313
(62) Divisional of application: 05723628.3
(71) Applicant: Motorola, Inc., Schaumburg, IL 60196 (US)
(72) Inventor: Kittlaus, Dag A., Mundelein, IL 60060 (US); Merkel, Jeffrey E., Chicago, IL 60614 (US); Binzel, Charles P., Bristol, WI 53104 (US); Bruner, John D., South Barrington, IL 60010 (US); Kotzin, Michael D., Buffalo Grove, IL 60089 (US); Schatzberger, Richard J., Chicago, IL 60622 (US)
(74) Representative: Openshaw, Paul Malcolm

(57) **Abstract**

A wireless communication device (104) comprising a transceiver (202), a memory portion (206) and a display (208). The transceiver (202) receives (704,806) a data stream of media content from a remote device (102) on a periodic basis. The memory portion (206) stores (704,806) the data stream in a content cache (306). The data stream is retrieved from the content cache (306) a portion at a time, and the display (208) displays (706,808) the portion. The display (208) has a passive mode and an actuated mode. In the passive mode, dynamic media content is continually provided at the display (208) throughout operation. In the actuated mode, detailed content and/or functionality associated with the dynamic media content is provided. The touch screen (210) which is overlaying the display, changes the display from the passive mode to the actuated mode upon activation.

## Description

### FIELD OF THE INVENTION

The present invention relates generally to the field of systems and methods for providing information to wireless communication devices. More particularly, the present invention relates to systems and methods for providing applications and media artifacts, including text, video, audio and multimedia content, to wireless communication devices that utilize and interact with such content and/or related functions.

### BACKGROUND OF THE INVENTION

Television broadcast companies are able to multimedia broadcast content to televisions of many consumers. Televisions are quite popular among consumers due, in part, to the convenience of simply viewing the multimedia broadcast content with minimal interaction required. Televisions became even more convenient when portable versions of them enabled consumers to view the multimedia broadcast content wherever the consumer traveled. Portable televisions receive multimedia broadcast content continually and, thus, subject the power source of the portable television to constant power drain.

Computing devices are also capable of providing multimedia content to consumers. Consumers may download and view multimedia content on a desktop or notebook computer via access to a computer network, such as the Internet. Also, information may be provided to a networked-computer by utilizing Push Technology. Unlike other systems which require each device to request information from information sources, Push Technology delivers information automatically to a device according to programmed preferences. Thus, Push Technology eliminates the need of a computing device to seek out one or more information sources to gather specific information of interest. Some computing devices receive "streams" of multimedia content and, thus, continually receive the content similar to portable televisions.
Other computing devices download the multimedia content all-at-once so that the computing device is not constantly communicating with the computer network.

Unfortunately, television and computer technologies are not well suited for many wireless applications. Users of wireless communication devices frequently need access to a variety of information, but such information is not as readily available as wired connections due to the limited bandwidth of wireless connections. Wireless communication systems are challenged to maximize the quality of information provided to wireless communication devices while minimizing the traffic imposed on the wireless connections to the devices.

In view of the above, there is a need for a system and method for managing and displaying content at a wireless communication device to maximize content quality while minimizing power consumption. In particular, there is a need for a system and method that provides continuous media content for convenient, passive viewing without necessitating constant communications or large all-at-once downloads that may significantly impact power consumption.

### BRIEF DESCRIPTION OF THE DRAWINGS

FIG. 1 is a schematic diagram illustrating an exemplary embodiment in accordance with the present invention.

FIG. 2 is a block diagram illustrating exemplary internal components of various servers, controllers and devices that may utilize the present invention.

FIG. 3 is a schematic diagram illustrating an exemplary embodiment of a device in accordance with the present invention.

FIG. 4 is a relational diagram illustrating exemplary operations of a device in accordance with the present invention.

FIG. 5 is a schematic diagram illustrating exemplary navigation of a device in accordance with the present invention

FIG. 6 is a front planar view of an exemplary display of a device in accordance with the present invention.

FIG. 7 is a flow diagram illustrating an exemplary operation of a device in accordance with the present invention.

FIG. 8 is a flow diagram illustrating another exemplary operation of a device in accordance with the present invention.

### DETAILED DESCRIPTION OF THE PREFERRED EMBODIMENTS

One aspect of the present invention is a wireless communication device comprising a wireless transceiver, a memory portion and a display, and a method thereof. The wireless transceiver receives a data stream of media content from a remote device on a periodic basis. The memory portion stores the data stream in a content cache. The data stream is retrieved from the content cache a portion at a time, and the display displays the portion.

Another aspect of the present invention is a wireless communication device comprising a display and a touch screen overlaying the display. The display has a passive mode and an actuated mode. In the passive mode, dynamic media content is continually displayed at a portion of the display throughout operation. In the actuated mode, detailed content and/or functionality associated with the dynamic media content displayed at the portion of the display is provided. The touch screen changes the display from the passive mode to the actuated mode upon activation of a portion of the touch screen associated with the portion of the display.

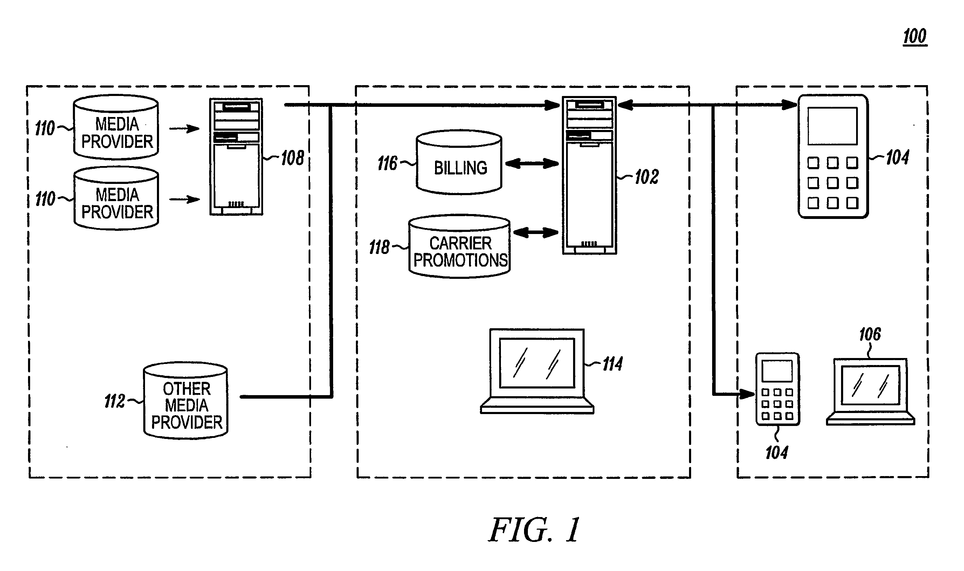

Referring to FIG. 1, there is provided a wireless communication system 100 in accordance with the present invention. The system 100 includes one or more media gateway 102 communicating via wireless link to a plurality of wireless communication devices 104. Any type of wireless link may be utilized for the present invention, but it is to be understood that a high speed wireless data connection is preferred. For example, each media gateway 102 may communicate with the plurality of wireless communication devices 104 via a cellular-based communication infrastructure that utilizes a cellular-based communication protocols such as AMPS, CDMA, TDMA, GSM, iDEN, GPRS, EDGE, UMTS, WCDMA and their variants. Each media gateway 102 may also communicate with the plurality of wireless communication devices 104 via a peer-to-peer or ad hoc system utilizing appropriate communication protocols such as Bluetooth and IEEE 802.11. A wireless communication device 106 may also communicate with the media gateway 102 indirectly via another wireless communication device 104 that is communicating with the media gateway directly. In such case, the indirect wireless communication device 106 may communicate with the direct wireless communication device 104 via a wireless link as described above or a direct link, such as a cable or connector. It is to be understood that any functionality of the wireless communication device 104 may also apply to the indirect wireless communication device 106 due to the communication between the devices via the above wireless link.

The media gateway 102 may receive feeds of media channels, buffer and cache the feeds, and feed them to wireless communication devices 104. The term "channel" refers to content that is received from a single content source and provided in a particular format, such as an XML language, and the term "feed" refers to fetching of a file from a particular channel. For one embodiment, the media gateway 102 compresses combined channels and provides them to the wireless communication devices 104 where they are decompressed, separated and stored in a content cache. The media gateway 102 may feed information to the wireless communication device 104 using push, pull and poll technology. For example, for one embodiment, the media gateway 102 generally pushes information to the wireless communication device 104, and the device pull technology from the media gateway upon request.

Although the media gateway 102 may operate on a common platform with other devices, the media gateway may also serve as a control point across multiple platforms. Regardless of the platform used, the media gateway 102 controls, bills and tracks information that is available to the wireless communication devices 104 and, thus, has access to media content from one or more sources. As shown in FIG. 1, the media gateway 102 may receive media content from a content aggregator 108 that collects media content from various media providers 110 and/or from media providers 112 directly. Preferably, all media content received by the media gateway are provided in a common format such as, for example, the XML language using the RDF Site Summary (RSS) specification. Some media providers 110 may not provide media content in a common format, so they may deliver the media content to the content aggregator 108. The content aggregator 108 may, in turn, convert the media content to a common format and forward the converted media content to the media gateway 102.

The media gateway 102 may also be directly controlled by a service provider, or be coupled to a cockpit controller 114 of a service provider, to manage the flow of billing information 116 and/or other media content 118, such as service provider promotions, for the wireless communication system 100.

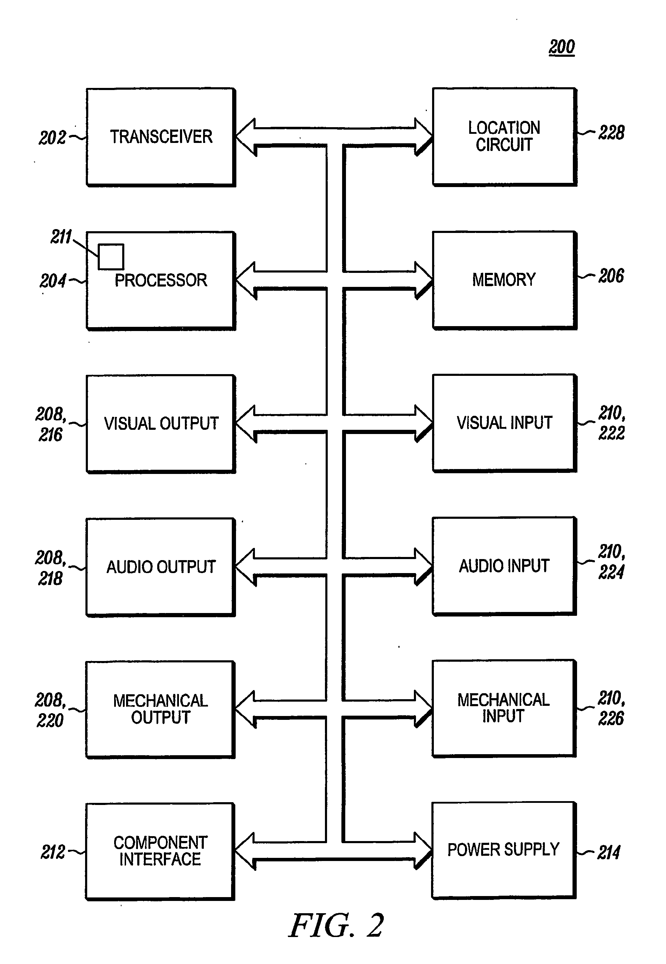

Referring to FIG. 2, there is provided a block diagram illustrating exemplary internal components of various servers, controllers and devices that may utilize the present invention. The exemplary embodiment includes one or more transceivers 202, a processor 204, a memory portion 206, one or more output devices 208, and one or more input devices 210. Each embodiment may include a user interface that comprises at least one input device 210 and may include one or more output devices 208. Each transceiver 202 may be a wired transceiver, such as an Ethernet connection, or a wireless connection such as an RF transceiver. The processor 204 may couple to, i.e., may include or be connected to, a timing circuit 211 that may determine the current time, i.e., current date and time of day, of the device. Unless otherwise stated, the term "time" as used herein may also include calendar date information as well as clock time information. The internal components 200 may further include a component interface 212 to provide a direct connection to auxiliary components or accessories for additional or enhanced functionality. The internal components 200 preferably include a power supply 214, such as a battery, for providing power to the other internal components while enabling the server, controller and/or device to be portable.

Referring to the media gateway 102, wireless communication devices 104 and content aggregator 108 shown in FIG. 1, each machine may have a different set of internal components. The media gateway 102 and the content aggregator 108 may include a transceiver 202, a processor 204, a memory 206 and a power supply 214 but may optionally include the other internal components 200 shown in FIG. 2. The memory 206 of the media gateway 102 and the content aggregator 108 should include high capacity storage in order to handle large volumes of media content. Each wireless communication device 104 must include a transceiver 202, a processor 204, a memory 206, one or more output devices 208, one or more input devices 210 and a power supply 214. Due to the mobile nature of the wireless communication device 104, the transceiver 202 should be wireless and the power supply should be portable, such as a battery. The component interface 212 is an optional component of the wireless communication device 104.

An exemplary function of the wireless communication device 104 as represented by the internal components 200, upon reception of wireless signals, the internal components detect communication signals and the transceiver 202 demodulates the communication signals to recover incoming information, such as voice and/or data, transmitted by the wireless signals. After receiving the incoming information from the transceiver 202, the processor 204 formats the incoming information for one or more output devices 208. Likewise, for transmission of wireless signals, the processor 204 formats outgoing information, which may or may not be activated by the input devices 210, and conveys the outgoing information to the transceiver 202 for modulation to communication signals. The transceiver 202 conveys the modulated signals to the media gateway 102 via a remote transceiver.

The input and output devices 208, 210 of the internal components 200 may include a variety of visual, audio and/or mechanical outputs. For example, the output device(s) 208 may include a visual output device 216 such as a liquid crystal display and light emitting diode indicator, an audio output device 218 such as a speaker, alarm and/or buzzer, and/or a mechanical output device 220 such as a vibrating mechanism. Likewise, by example, the input devices 210 may include a visual input device 222 such as an optical sensor (for example, a camera), an audio input device 224 such as a microphone, and a mechanical input device 226 such as a flip sensor, keyboard, keypad, selection button, touch pad, touch screen, capacitive sensor, motion sensor, and switch. Actions that may actuate one or more input devices 210 include, but not limited to, opening the wireless communication device, unlocking the device, moving the device to actuate a motion, moving the device to actuate a location positioning system, and operating the device.

The internal components 200 of the media gateway 102, wireless communication devices 104 and content aggregator 108 may include a location circuit 228. Examples of the location circuit 228 include, but are not limited to, a Global Positioning System (GPS) receiver, a triangulation receiver, an accelerometer, a gyroscope, or any other information collecting device that may identify a current location of the device.

The memory portion 206 of the internal components 200 may be used by the processor 204 to store and retrieve data. The data that may be stored by the memory portion 206 include, but is not limited to, operating systems, applications, and data. Each operating system includes executable code that controls basic functions of the communication device, such as interaction among the components of the internal components 200, communication with external devices via the transceiver 202 and/or the component interface 212, and storage and retrieval of applications and data to and from the memory portion 206. Each application includes executable code utilizes an operating system to provide more specific functionality for the communication device, such as file system service and handling of protected and unprotected data stored in the memory portion 206. Data is non-executable code or information that may be referenced and/or manipulated by an operating system or application for performing functions of the communication device.

The processor 204 may perform various operations to store, manipulate and retrieve information in the memory portion 206. Each component of the internal components 200 is not limited to a single component but represents functions that may be performed by a single component or multiple cooperative components, such as a central processing unit operating in conjunction with a digital signal processor and one or more input/output processors. Likewise, two or more components of the internal components 200 may be combined or integrated so long as the functions of these components may be performed by the communication device.

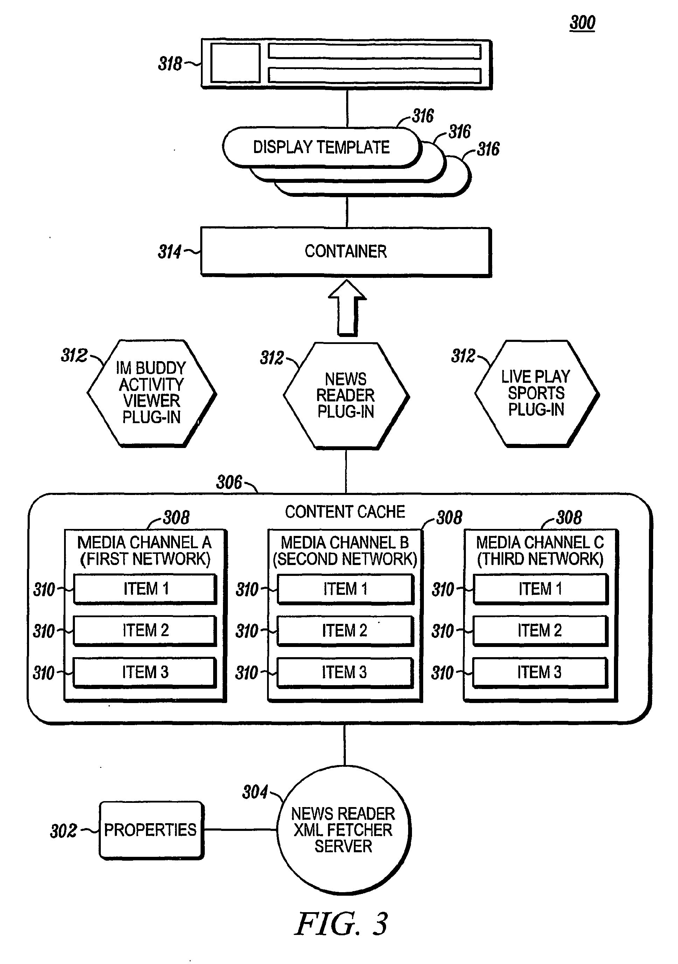

Referring to FIG. 3, there is provided a schematic diagram illustrating an exemplary embodiment of a device, such as wireless communication device 104. As described above, channels of content and properties 302, such as connection and channel settings, are received from one or more media gateways 102 by each wireless communication device 104. Channels are chosen from a list, synchronized on the media gateway 102, identifying channels that are available to the wireless communication device 104. The wireless communication device 104 includes a service 304, stored in the memory 206 and executed by the processor 204, that fetches content from the media gateway 102 and places them a content cache 306 of the memory. The content files and fetch details are specified by the channel settings and properties received from the media gateway 102. Each content file includes one or more items having information based on a common format, such as an XML schema based off RSS. For example, as shown in FIG. 3, the content cache 306 may store multiple channels 308 of content in which each channel may include multiple items 310 of content.

The exemplary embodiment of the device also includes one or more plug-ins 312 to provide functionality and one or more containers 314 operating as framework elements and having an area on the display. Examples of plug-in functionality include, but are not limited to, instant messaging buddy activity viewing, news reading, live play sport viewing and advertisement viewing. Each container 314 may be associated with one or more plug-ins 312. For example, as shown in FIG. 3, the news reader plug-in 312 is loaded into the container 314. For one embodiment, the plug-in 312 is designed to fetch XML (RSS) files and display the content referenced in the XML file for the container 314. The container 314 holds rules for interaction between loaded plug-ins based on where the container is displayed, e.g., idle status of the device.

The exemplary embodiment of the device further includes one or more display templates 316 and a display area 318, as referenced above, associated with a container 314. Each container 314 may provide a channel 308 of content, stored in the content cache 306, at the display area 318 of an output device 208. Individual items 310 of the channel 308 are displayed based on the container information and corresponding display template 316. The display template 316 defines the manner in which content is displayed at the display area 318. The display template 316 to use for a particular content is defined by channel settings for the current channel 308.

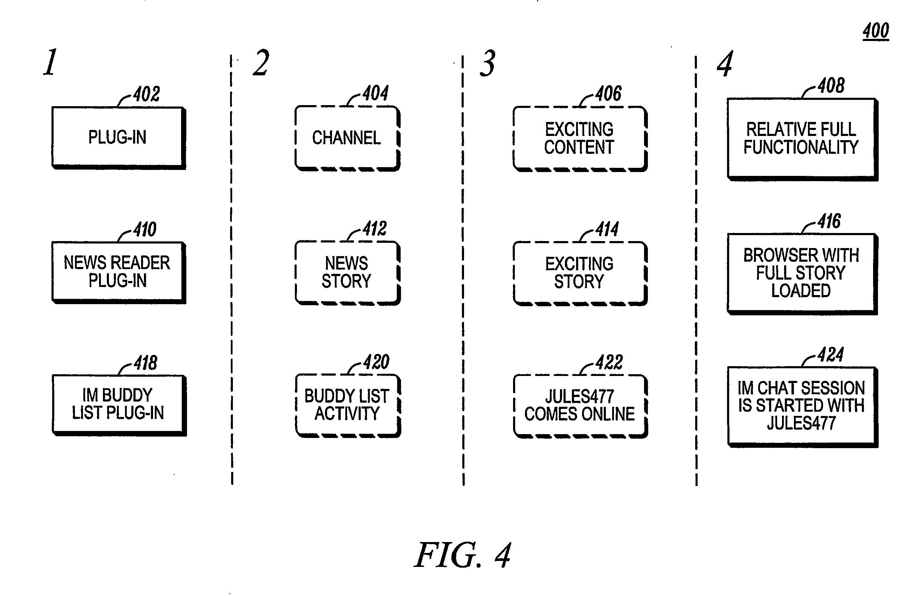

Referring to FIG. 4, there is provided a relational diagram illustrating exemplary operations of a device in accordance with the present invention. The present invention provides a simple way to contextually multitask with applications and features on devices having limited screen sizes and/or limited computing power, such as many types of wireless communication devices. As shown in FIG. 4, the exemplary operations utilizes a framework of containers which display information and provide access to functionality relevant to the information currently displayed. Contextual information is provided and formatted in reusable containers as channels of information or functionality. The information may be delivered by loading functionality into containers, such as plug-ins described above.

The plug-ins may display and gather information in a number of ways, make network connections, gather external information and provide the information via an output device 208. Plug-ins may be loaded into containers to provide customization, particularly for idle state plug-ins. The plug-ins have specific functionality to provide relevant information to an output device 208. The plug-in framework allows the plug-in to launch applications by supplying a launch string. The plug-ins may search locally to the device to gather information and provide the information to the output device 208. The plug-ins may also call the functionality of other applications, services and/or API's on the display and surface the information and/or functionality wherever the container exists. Each piece of information may include a direct access link to more information by providing more content or direct access to functionality, applications or tasks. Examples of plug-ins include news reader plug-ins, short cut plug-ins, and 3rd party plug-ins.

With plug-ins and channels of content, the wireless communication device may passively monitor device activity relating to information provided by one or more output devices 208. Content will be provided to the output device or devices 208 on a regular basis, and deeper content and/or functionality may be accessed by activation of one or more input devices 210.

The general concept of device engagement as well as two examples are shown. For the general concept, a channel may be selected by an input device 210 so that its content may be provided in a container during an idle state of the wireless communication device. Upon selection, as represented by block 402, a plug-in appropriate for the channel may be associated with the container and gather information, i.e., media content, in the background of the device's operation. Next, as represented by block 404, the output device 210 provides information through the selected channel. The information may be provided using uncommon technology or common technology such as JAVA SVG, Flash, SMILE and the like. At some point thereafter, as represented by block 406, a user may select the channel of particular interest by actuating an input device 210 to launch relative functionality. Thus, a command is passed to the processor 204 to cause corresponding functionality to be executed. In response, as represented by block 408, the user has more access to delve deeper into the content or functionality of the channel.

One type of channel is a media channel which is exemplified by the middle row of FIG. 4. For this example, the media channel utilizes a news reader plug-in. Media channels are pure content, and content creators and owners may deliver content to the device from their current management systems by using a common format to deliver the content, such. A user may choose to display news in a container by utilizing a news reader plug-in as represented by block 410. Thus, a service 304 may gather formatted feeds, such as XML (RSS) feeds, from the media gateway 102 and store the latest news stories in the content cache 306. The news reader plug-in provides the news stories one at a time through a channel 308 in a container 314, so a user may passively view the news stories, as represented by block 412. For example, top news stories may be displayed by an output device 208 through an SVG displayer. When an interesting story appears that is of interest to the user, the user may actuate an input device 210 to select the channel and find out more information, as represented by block 414. The selection of the channel may, for example, cause the news plug-in to obtain the corresponding full story by obtaining an URL of an associated news website from an XML item, as represented by block 416. The media content may be obtained directly from the website and cached in the content cache 306 or from the content aggregator 108 and cached in the content cache. As a result, a browser may be launched by the processor 204 and the URL of the XML item may be loaded, so that a web page is provided by an output device 208.

Another type of channel is a functional channel which is exemplified by the bottom row of FIG. 4. For this example, the functional channel utilizes an Instant Messaging (IM) buddy list plug-in. Functional channels are single channels with functionality built into them. Examples of functional channels include, but are not limited to, JAVA applications that may be used to gather information from within the device and multimedia players that may fetch rich content from the World Wide Web. A user may desire to monitor IM buddies, an IM buddy list plug-in may be associated with a container, as represented by block 418. An IM client resident in the wireless communication device may stay up-to-date with the users of the IM buddy list. The user may passively view the activity of her or his buddies at an output device 208 as buddies come online or sign off, as represented by block 420. When the user desires to communicate with another user who comes online, the user may select the channel using an input device 210, as represented by block 422. The buddy's identification is passed to the IM client with instructions to initiate a chat session. The IM client initiates the chat session with the device of the other user who just signed on, as represented by block 424.

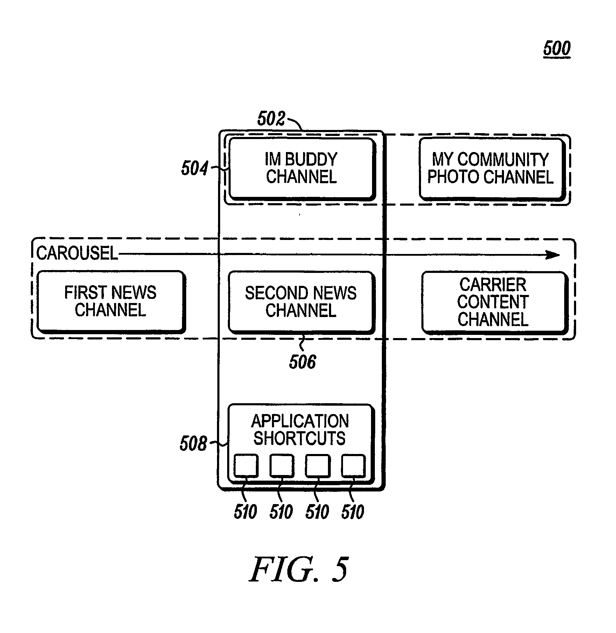

Referring to FIG. 5, there is provided a schematic diagram illustrating exemplary navigation of a device in accordance with the present invention. A display of a wireless communication device may show and provide interaction for various types of information such as status information regarding the performance of the device and a menu system for operating and configuring the device. The present invention further includes a plurality of display areas for providing channels of content and application shortcuts. In particular, each display area corresponds to a particular container, and each container may provide channel content to its corresponding display area. For one embodiment, as shown in FIG. 5, the display areas have elongated, horizontal dimensions and are provided in parallel and adjacent to each other. However, it is to be understood that the display areas may have other dimensions or positions so long as the functional properties of the display areas are preserved and the content is conveniently viewable by a user.

FIG. 5 shows an illustrative representation of a visual output 216, i.e., display screen 502, of a wireless communication device. For the example shown, the display screen 502 includes an upper display area 504 associated with a first container for providing media content of an IM Buddy channel, a middle display area 506 associated with a second container for providing media content of a News channel, and a lower display area 508 associated with a third container for providing application shortcut links 510. Each container may only display media content associated with one channel at a display area at any given time. The first container utilizes an IM Buddy Activity Viewer plug-in to manage and display each item of the IM Buddy channel to the upper display area 504 in the appropriate manner, the second container utilizes a News Reader plug-in to manage and display each item of the News channel to the middle display area 506 in the appropriate manner, and the third container provides shortcut links 510 to a plurality of applications at the lower display area 508. For the third container, each shortcut link 510 may be associated with a plug-in or other application stored in memory 206 of the device such as, but not limited to, an access plug-in to an online service, a phonebook application, a file management application, a calendar application and a multimedia management plug-in.

A user may navigate among the display areas 504, 506, 508 to select one or more channels for each container and its associated display area. After a particular channel is selected, the processor 204 automatically loads the appropriate plug-in or plug-ins 312 and display template 316 for the channel based on channel configuration information and format information fetched by the device's service 304. The user may also navigate between items within a container, such as various locations and shortcut links within a display area.

As represented by FIG.5, a carousel function of the wireless communication device allows multiple channels to be displayed in a single container. As stated above, each container may only display media content associated with one channel at a display area at any given time. Thus, the carousel function cycles through all channels associated with a particular container, and its associated display area, so that the channels may be viewed by a user within a given time period. For example, the first display area 504 may cycle through an IM Buddy channel and a My Community Photo channel. Likewise, for example, the second display area 506 may cycle through a First News channel, a Second News channel and a Carrier Content channel. Although the carousel function may cycle to another channel in response to user activation of an input device 210, in the alternative, the carousel function may cycles from one channel to another automatically without user input. The carousel function may change the channel of each container at regular predetermined time intervals or the carousel function may determine a viewing time period for each channel based on its channel type or media content type.

Although channel cycling may occur at predetermined time intervals or based on an initial time set by a user, the wireless communication device may also coordinate the cycling of channels for each container to maximize viewing ease by the user. For example, the channels may change for each display area in sequential order from top-to-bottom (i.e., display area 504 to display area 506 to display area 508), or vice-versa, so that the user may view each display area in the same sequential order. The carousel function may further cycle through shortcut links and channels of shortcut links in the same manner. For example, the third display area 508 may cycle between a first group of shortcut links 510 to a second group of shortcut links or cycle to other groups of shortcut links before returning the first group.

It is to be understood that, in addition to general media content of interest to a user, the wireless communication device 104 may also provide advertising content that may or may not be of interest to the user. Advertising content may be provided in a particular display area as a channel or a particular item of a channel. Also, advertising content may be intermixed with the general media content. For example, when viewing items of a particular channel or using the carousel function to cycle through channels (whether by user activation or automatically as described above), advertising content in the form of an item or a channel may be provided after a predetermined time period and/or after a predetermined number of items or channels have been viewed.

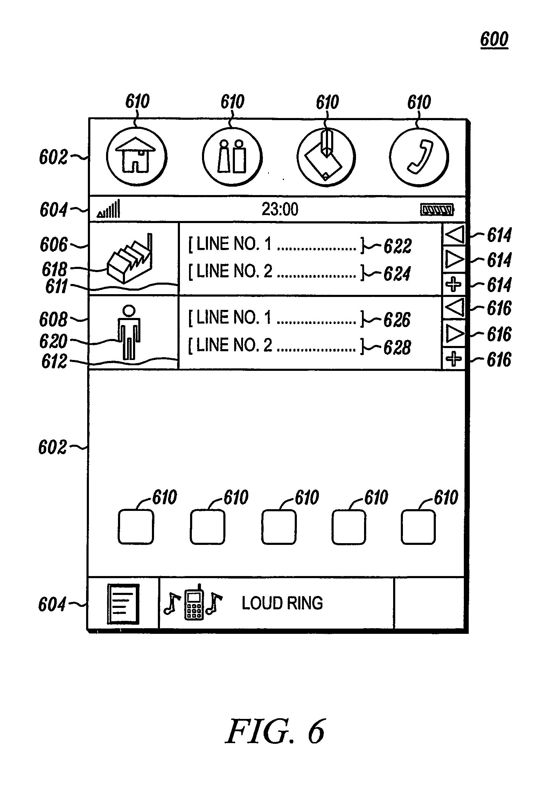

Referring to FIG. 6, there is shown an exemplary display 600 of the wireless communication device 104. For this embodiment, the display 600 provides three section types: quick access sections 602, status sections 604, and display areas 606, 608. The quick access sections 602 may include one or more buttons 610 to provide quick access to certain features and/or applications of the wireless communication device 104. Examples of quick access features and/or applications include, but are not limited to, Home menu, messaging, calendar/scheduling, task list, contact list, online service, integrated device, peripheral device, device menuing, and communication interface features and applications. The status section 604 may include information indicating a status of one or more device features and/or applications. Examples of the information provided by the status sections 604 include, but are not limited to, signal strength, date/time, power source, received message, and ring tone indicators.

The display 600 includes one or more display areas, 606, 608, and each display area is associated with a particular container 314. For the embodiment of FIG. 6, two display areas 606, 608 are positioned adjacent to each other, e.g. one above the other. Each display area 606, 608 includes a content part 610, 612 and may include a control part 614, 616. The content part 610, 612 of the display area 606, 608 provides one or more items 310 of a channel 308 for viewing by a user of the wireless communication device 104. For example, for the embodiment shown, the content parts 610, 612 of the display areas 606, 608 include an image 618, 620 on one side of the content part and lines 622, 624, 626, 628 of text on the other side of the content part. New items 310 may be introduced to the content parts 610, 612 by replacing existing items or scrolling-on as other items scroll-off. For example, in FIG. 6, new lines of text may replace the lines 622, 624 of the upper display area 610. As another example, in the alternative, the upper line 626 of text of the lower display area 612 may scroll upward toward the top border and out-of-view, and a new line of text may scroll upward from the bottom border and come into view. The control parts 614, 616 may be selected by a user to manipulate the corresponding content part 610, 612. Examples of functions of the control parts 614, 616 include, but are not limited to, forward cycling of channels, backward cycling of channels and display area removal.

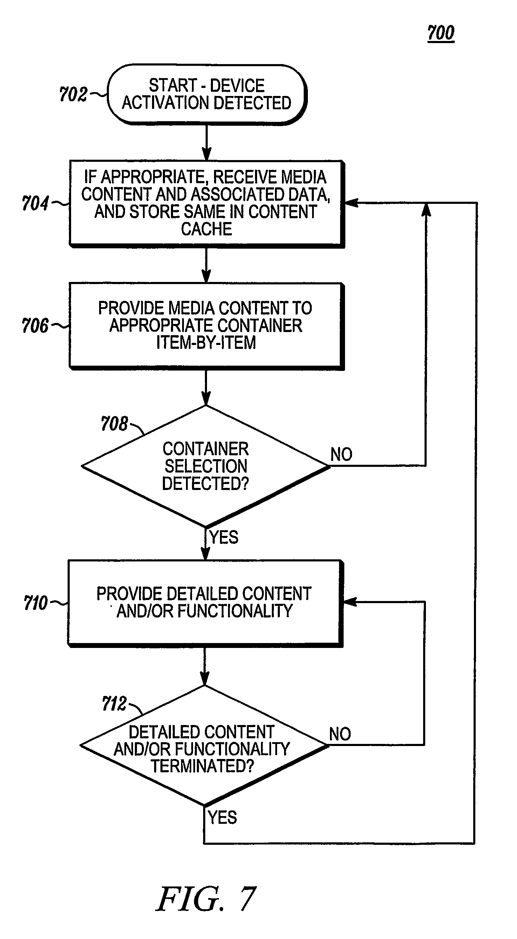

Referring to FIG. 7, there is shown a flow diagram illustrating a first exemplary operation 700 of the wireless communication device 104. The first exemplary operation 700 begins at step 702 by activation of the wireless communication device 104. For example, the first exemplary operation 700 may be executed when device 104 is first power-up and is still in idle mode, i.e., awaiting an action or signal for performing one of the various functions of the device. After the device 104 is activated, the transceiver 202 of the device receives a data stream of media content and associated data from a media gateway 102 via wireless communication at step 704. After receiving the data stream of media content, the device 104 stores the media content and the associated data in a memory portion 206, such as the content cache 306. The device 104 then retrieves the data stream from the content cache a portion at a time, provides the media content to the appropriate container 314, and displays the portion on a display at step 706. For example, the device 104 may provide to a particular container 314 one or more items 310 of a particular channel 308 associated with the container. If the input devices 210 of the device 104 do not detect any selection of a container 314 at step 708, then the device continues to provide media content to the appropriate container at step 706 and, if appropriate, continues to receive a data stream of media content from the media gateway 102 on a periodic basis at step 704.

If, at step 708, a container selection is detected, then the device 104 provides detailed content and/or functionality associated with the selected container 314 at step 710. The device 104 continues to provide the detailed content and/or functionality by repeating steps 710 and 712 until the detailed content and/or functionality is terminated at step 712. For example, when the user no longer wishes to view the detailed content and/or functionality any longer, the user may select a termination button. Thereafter, the device 104 returns to providing media content to the appropriate container and, if appropriate, receiving a data stream of media content from the media gateway 102 on a periodic basis.

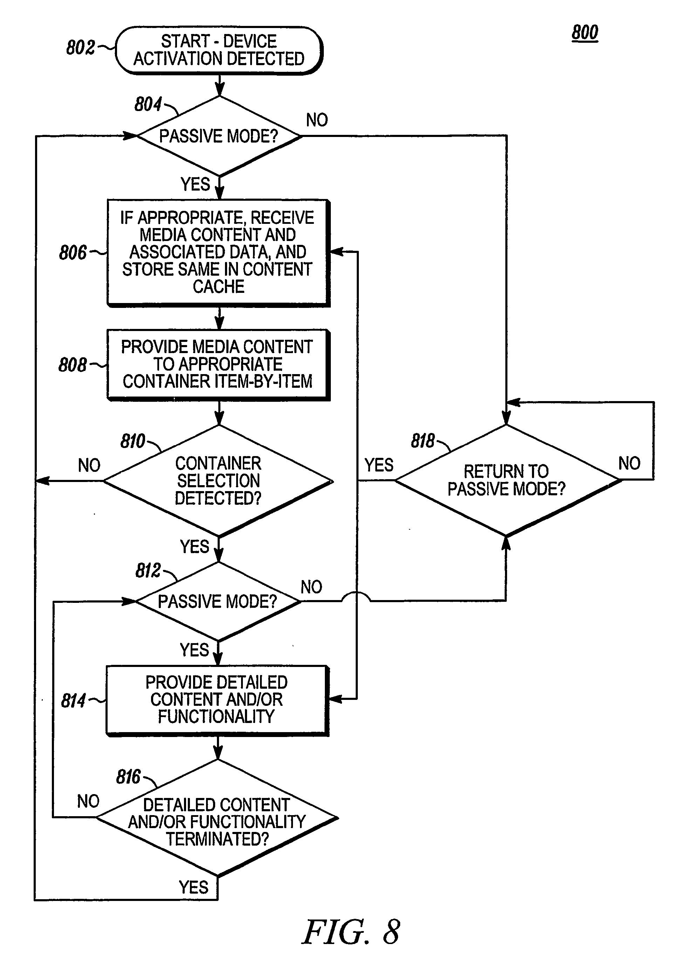

Referring to FIG. 8, there is shown a flow diagram illustrating a second exemplary operation 800 of the wireless communication device 104. The second exemplary operation 800 begins at step 802 by activation of the wireless communication device 104. After the device 104 is activated, the device 104 may check to see if the device is in a passive mode at step 804. During passive mode, the user simply views content on the display with minimal interaction with the user interface. If the device is in passive mode, then the transceiver 202 of the device receives a data stream of media content and associated data from a media gateway 102 via wireless communication at step 806. After receiving the data stream of media content, the device 104 stores the media content and the associated data in a memory portion 206, such as the content cache 306. The device 104 then retrieves the data stream from the content cache a portion at a time, provides the media content to the appropriate container 314, and displays the portion on a display at step 808. If the input devices 210 of the device 104 do not detect any selection of a container 314 at step 810, then the device continues to provide media content to the appropriate container at step 808 and, if appropriate, continues to check the mode of the device at step 804 and continues to receive a data stream of media content from the media gateway 102 on a periodic basis at step 806.

If, at step 810, a container selection is detected, then the device 104 checks again to see if the device is in passive mode at step 812. If so, then the device 104 provides detailed content and/or functionality associated with the selected container 314 at step 814. The device 104 continues to provide the detailed content and/or functionality by repeating steps 812, 814 and 816 until the detailed content and/or functionality is terminated at step 816. Thereafter, the device 104 returns to providing media content to the appropriate container and, if appropriate, receiving a data stream of media content from the media gateway 102 on a periodic basis.

If at any time during the operation of the second exemplary mode, such as at steps 804 or 812, then the device may operate in an actuated mode at step 818. For example, the actuated mode may be activated by another feature or function of the wireless communication device 104 such as a voice and/or data call or execution of an application. After the device 104 terminates the actuated mode and returns to passive mode at step 818, the device may continue operation where it left off (as shown in FIG. 8) or start at a predetermine step of the second exemplary operation 800.

[0048] For one embodiment, the wireless communication device 104 provides instant media upon power-up. In particular, upon powering-up the device 104, the device receives a data stream of media content from the media gateway 102 and displays the data stream at a display of the device, a portion at a time. Thus, the device 104 provides current media content to the display of the device on a periodic basis in response to activation of a power source of the device and without any further actions or instructions from a user via a user interface or other source. Accordingly, the user may passively view the received media content without the need for discovering or seeking the content.

While the preferred embodiments of the invention have been illustrated and described, it is to be understood that the invention is not so limited. Numerous modifications, changes, variations, substitutions and equivalents will occur to those skilled in the art without departing from the spirit and scope of the present invention as defined by the appended claims.

## Claims

1. A wireless communication device comprising:
a display having a passive mode and an actuated mode, the passive mode being effective to continually display dynamic media content at a portion of the display throughout operation in the passive mode, and the actuated mode being effective to provide at least one of detailed content and functionality associated with the dynamic media content displayed at the portion of the display; and
a touch screen, overlaying the display, configured to change the display from the passive mode to the actuated mode upon activation of a portion of the touch screen associated with the portion of the display.

2. The wireless communication device of claim 1, wherein the display includes a second portion configured to change a channel of media content in response to activation of a second portion of the touch screen associated with the second portion of the display.

3. The wireless communication device of claim 1, wherein the display changes back from the actuated mode to the passive mode upon termination of the at least one of the detailed content and the functionality.

4. The wireless communication device of claim 1, wherein the display includes a plurality of display areas configured to display dynamic media content, each display area being effective to display a different channel of media content.
